# EUROPEAN PATENT SPECIFICATION

(11) **EP 2 983 373 B1**
(45) Date of publication and mention of the grant of the patent: **03.10.2018**
(21) Application number: 14179774.6
(22) Date of filing: 04.08.2014
(51) Int. Cl.: H04N 21/2387, G11B 27/00, H04N 21/4147, H04N 21/433, H04N 21/472, H04N 21/6587, H04N 21/81, H04N 5/76, H04N 5/783, H04N 9/82

(54) **RENDERING OF AN AUDIO AND/OR VIDEO SIGNAL COMPRISING TRICK PLAY LIMITED PARTS**
WIEDERGABE EINES AUDIO- UND/ODER VIDEO-SIGNALS MIT TEILEN, BEI DENEN DAS VOR- UND ZURÜCKSPULEN BESCHRÄNKT IST
REPRODUCTION D'UN SIGNAL AUDIO ET/OU VIDÉO AVEC DES LIMITATIONS POUR LA LECTURE EN MODE TRUQUÉ

(43) Date of publication of application: 10.02.2016
(73) Proprietor: TP Vision Holding B.V., 1097 JB Amsterdam (NL)
(72) Inventor: MAES, Jurgen Pieter, 9052 Gent (BE)
(74) Representative: DREISS Patentanwälte PartG mbB

(56) References cited:
- US-A1- 2006 013 557
- US-A1- 2007 263 980
- US-A1- 2008 193 104
- US-A1- 2008 317 433

## Description

### FIELD OF THE INVENTION

The invention relates to a method of controlling the rendering of an audio and/or video signal comprising trick play limited parts for which skipping during trick play is not desirable. The invention further relates to a time shift arrangement for program information representing an audio and/or video program comprising trick play limited program parts for which skipping during trick play is not desirable.

### BACKGROUND OF THE INVENTION

The revenue income of commercial TV-program providers is principally derived from commercials interspersed with the programming. As is well known, a TV show is typically interrupted by commercial breaks during which commercials are played. A program provider sells commercial time slots to advertisers for the purpose of placing commercials therein. The price of a commercial time slot varies with the anticipated size of the audience of the associated TV show, stemming from the assumption that the same audience would watch both the show and the commercial placed in such a time slot. That is, the more popular the show is, the more expensive the commercial time slots associated with the show.

Time shift services may adversely affect the return on their investment, inasmuch as the time shift service removes the traditional broadcast schedule constraint, and allows the user to view the program at a time with a delay. The fast-forward trick mode function afforded by the time shift service may negatively affect the advertising income. Using such a trick mode function, an user may fast-forward a TV program to skip commercials therein, thus rendering such commercials and advertisements ineffective. Advertisers are unlikely to pay well for ineffective commercials and advertisements.

The TV program providers are looking for solutions to reduce the possibilities for commercial skipping.

A method for counteracting skipping commercials is described in US2008193104.

US 2006/013557 A1 discloses suppression of trick modes in commercial playback.

US 2008/193104 A1 discloses prevention of trick modes during digital video recorder and network digital video recorder content.

US 2008/317433 A1 discloses trick modes for a playback apparatus. It teaches that a jump into a prohibited PlayItem is prevented. The jump is executed to the beginning of the prohibited PlayItem.

### SUMMARY OF INVENTION

It is an object of the invention to provide a method and arrangement which further counteracts the skipping of marked parts of broadcasted audio and /or video information.

According to a first aspect of the invention this is achieved by a method according to claim 1.

According to a second aspect of the invention the object of the invention is achieved by a time shift arrangement according to claim 7.

The invention is at least partly based on the insight that the parts with trick play restriction, such as for example commercials, can be skipped, by first switching the arrangement into the live mode and subsequently executing the second trick mode, such as for example a rewind mode, with which the read out of the shift buffer can be shifted to the end of the trick play limited part.

With the measures according to the invention this circumvention is not possible anymore, and TV program providers may continue to allow trick play to be used.

### BRIEF DESCRIPTION OF THE DRAWINGS

Further embodiments of the method and arrangement and the advantages thereof are presented hereinafter with reference to Figures 1 to 11 in which,
Fig. 1 shows a video program, e.g. a typical TV show comprising show elements and commercials,
Fig. 2 shows an embodiment of an arrangement according to the invention,
Fig.3 shows a flow diagram of a software controlled process which is executed when the arrangement is brought in the Pause mode,
Fig. 4 shows a flow diagram of a software controlled process which is executed when the arrangement is brought in the Play mode,
Fig. 5 shows the flow diagram of the process which is executed when a request command is received to bring the arrangement in the Live mode,
Fig. 6 shows a flow diagram of a software controlled process which is executed when the arrangement is brought in the Rewind mode,
Fig. 7 shows a flow diagram of a first embodiment of the subprogram for disabling the Rewind mode,
Fig. 8 shows a flow diagram of a software controlled process which is executed when the arrangement is brought in the Fast Forward mode.
Fig 9a to Fig. 9c show schematic overviews of the contents stored in the time shift buffer for different trick play situations,
Fig. 10 shows an embodiment of a system using an arrangement according to the invention, and
Fig. 11 shows another embodiment of a system using an arrangement according to the invention.

### DETAILED DESCRIPTION OF EMBODIMENTS

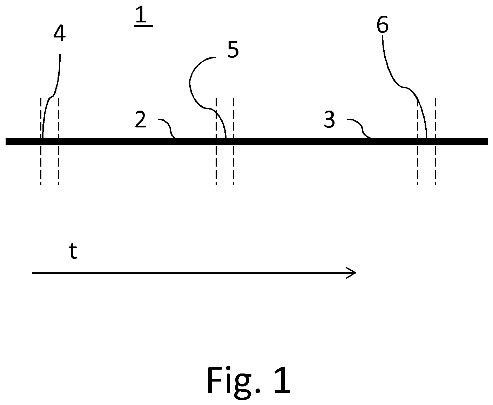

Fig. 1 schematically shows as a function of time t a video program 1, e.g. a typical TV show comprising show elements and trick play limited parts 4, 5 and 6 for which skipping during trick play is not desirable. Such part may for example represent commercials. The parts 2 and 3 represent the show elements. Usually video information representing the video program are transferred to a receiving device of a user.

The trick play restricted parts in the video program can be indicated in the metadata incorporated in the video information transferred.

In case of packetized digital video information the meta data can be incorporated in packets or parts of the packets which are reserved for this type of data.

It will be clear that the trick play limited parts can also be indicated in other ways than by meta data in the transferred video information. For example by means of software executing a dedicated algorithm or an application of a third party which for example available on the internet. The places of the trick play limited parts in the program can also be determined by using a data base in which the information about the places of the trick play limited parts are stored can be used. Further it is possible to mark a complete program as trick play limited in case the available methods for determining trick play limited parts give no results.

It is also possible to indicate parts for which no trick play limitations exist. Parts for which such indication, that there are no trick play limitations, is lacking can then be considered as trick play limited parts.

The invention will hereinafter be described with reference to equipment arranged for processing the video information representing the video part of a TV program. It will be clear that the invention is also applicable to equipment for processing audio information representing an audio program, e.g. radio program or an arrangement for processing both audio and video information.

The video information can be in analog format or digital format. An often used digital video format is the MPEG format, in which a sequence of images is coded according to one of the MPEG-standards for video information. However the invention is also applicable to video information coded according to other coding schemes or standards.

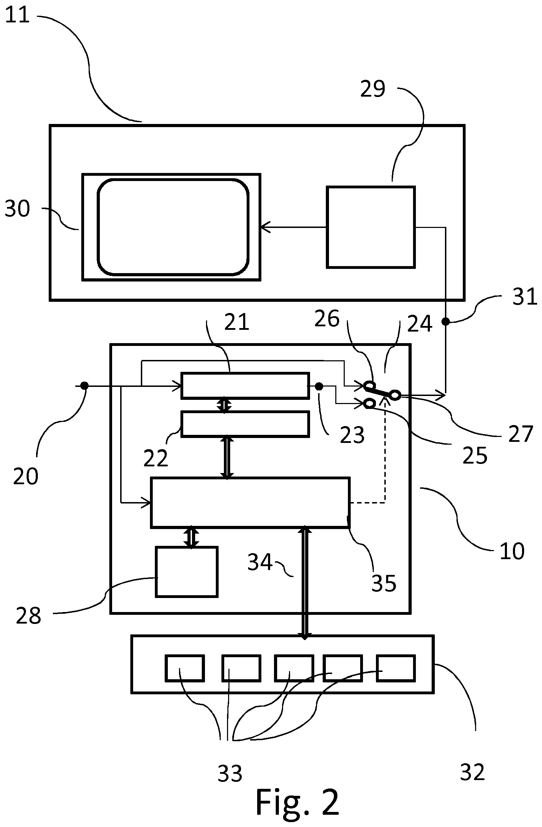

Fig 2 shows an embodiment of an arrangement 10 according to the invention coupled to a rendering unit 11. The arrangement 10 is provided with an input 20 for receiving video information representing the video part of a video program. The arrangement 10 further comprises a time shift buffer 21 for temporarily storing the received video information before it is outputted. For time shifting, the stored video information is read from the time shift buffer 21 a shift time interval later than it is written into the time shift buffer 21. The reading speed is chosen equal to the writing speed so that the video information on an output 23 becomes available with a delay with respect the receipt of the video information on input 20 at a normal speed.

A read/write controller 22 controls the write and read process of the video information in the time shift buffer 21.

The time shift buffer 21 is preferably a so called circular buffer, in which the video signal is stored in memory locations with subsequent address locations within an address range. As soon as the location with the highest address in the address range is filled the writing continues with the lowest address in the address range. The position with the lowest address is hereinafter referred to as the begin BB of the time shift buffer 21. The read out is performed in a similar manner. Thus as soon the as the location with the highest address is read the read process continues with the lowest address. Read/write controller 22 uses a pointer WP to keep record of the actual write address and a pointer RP to keep record of the read location.

It will be clear to the person skilled in the art that also other buffers than circular buffers can be used. Each memory in which a constant time difference can be kept between the writing of the content and the reading of this content can be used.

The video information received on input 20 is supplied to an input 26 of a multiplexer 24 and the time shifted video information on output 23 is supplied to input 25 of the multiplexer 24. The multiplexer 24 is controlled by an arrangement controller 35.

The arrangement 10 is operable in a Live mode and Time shifted mode. In the Live mode the video information on input 26 is fed via multiplexer 24 to a transfer output 27 of the arrangement 10. In the time shifted mode the time shifted video information on the output 23 of the time shift buffer 21 is fed to the transfer output 27.

The transfer output 27 is coupled to an input 31 of the rendering unit 11. The rendering unit 11 is provided with a video processor 29 which is coupled with the input 31. The video processor 29 submits display driving signals to a video display 30 causing a rendering of the video program represented by the video information.

The arrangement 10 controller 35 is provided with a programmable processor for performing software programs stored in a program memory 28. These programs comprise software for controlling the read write controller 22 and the multiplexer 24 to cause trick play. The trick play can be operated in several modes such as Pause mode, Play mode, Fast Forward mode and Rewind Mode. In the Pause mode the read out of the time shifted buffer 21 is stopped and video processor 29 is brought under control of controller 25 in a mode wherein it submits in an usual manner driving signals to the display 30 which cause a rendering of a still picture corresponding with latest picture available in video information on transfer output 27.

In the Play mode the video information in the time shift buffer 21 is read out at the time shift later than it was stored in the time shift buffer 21, whereby the read speed is equal to the write speed. The video information read from the time shift buffer is submitted to the video processor via the transfer output 27 which is brought by controller 25 in a mode where it submits driver signals which cause the rendering of the video program represented by the video information received on input 31 at normal speed. This results in a time shifted rendering of the video program on the display 30.

In the Fast Forward mode the read out of the time shift buffer a sequence of forward jumps are made, each time skipping a part of the video information. This results in that the video information is rendered on the display with higher speed than normal playback. Usually Fast Forward can be performed at different speeds, but always with a speed that is higher than the normal playback speed. In the Rewind mode the video information is read out in reversed order resulting in that the video program is rendered in reversed order. Usually the Rewind mode can be performed with different speeds. In principle the speed in the Rewind mode can be any speed, In other words the Rewind speed can be higher, equal or lower than the normal playback speed. The trick play processes are initiated under control of trick play commands , which can be for example user commands which can be given by a user via an user interface 32 comprising user command buttons 33, for example one separate button 33 for each of the different modes. The user commands are received by the arrangement controller 35 via a usual communication channel for example a signal bus 34.

The memory 28 further comprises software for storing control data related to the contents stored in the time shift buffer 21. These control data comprises the pointer BB to the beginning of the time shift buffer 21. If a new storing cycle of storing video information is started, for example after a change of a video channel or after switching on the arrangement, the storing starts at the address indicated by this pointer BB.

The control data also comprises the pointer WP which points to the actual address in which the data received on the input of the time shift buffer 21 is stored and a pointer RP which points to the actual address of the read out of the time shift buffer.

The control data also comprises the address ranges of the video information in the time shift buffer 21 which is already read, and consequently rendered on the display 30. The control data also comprises the address ranges of the locations in the time shift buffer where trick play restricted parts stored. These address ranges are for example determined during the writing of the trick play restricted parts.

Finally the control data comprises the address ranges of the video information parts representing the program parts with the trick play restrictions. These ranges can be derived from the meta data in the video information.

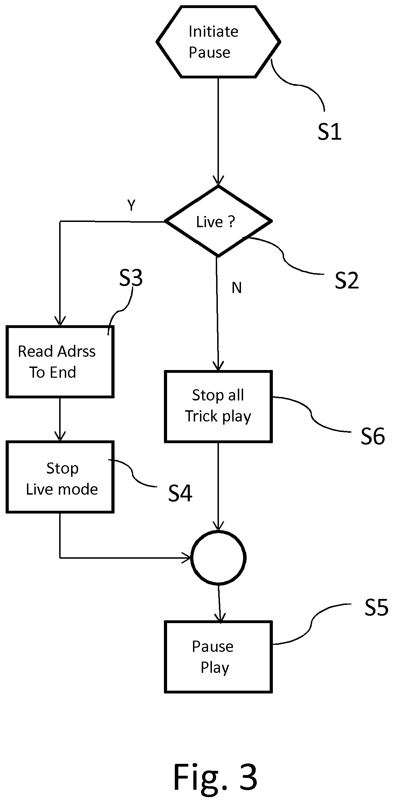

The trick play processes executed in the different trick play modes and Live mode are described hereinafter with reference to Figures 3 to 9.

Fig. 3 shows a flow diagram of a software controlled process which is executed when the arrangement is brought in the Pause mode. The process starts with an initiation step S1. Subsequently in step S2 it is tested whether the arrangement was operating in the live mode at the moment that the Pause mode was initiated.

If so, then step S3 is performed, in which the read pointer RP is set to a value that points to the part of the video information stored in the time shift buffer just before the Pause mode was initiated. This value of the read pointer is maintained until it has to be changed for another trick play process. Subsequently step S4 is performed in which the Live mode is ended. Step S4 is followed by step S5 in which a pause play is executed.

If in the execution of S2 it is determined that the arrangement was not operating in the live mode, then all trick play processes are stopped in step S6, followed by the execution of the pause play process in step S5.

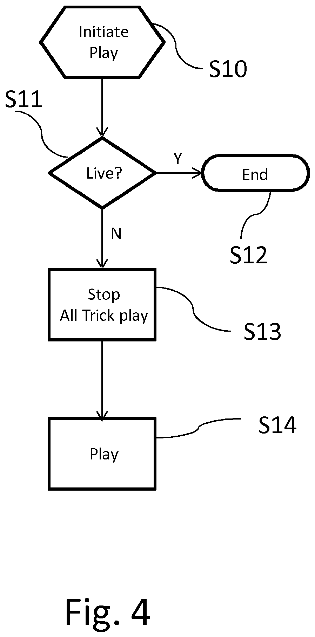

Fig. 4 shows a flow diagram of a software controlled process which is executed when the arrangement is brought in the Play mode (normal speed). In S10 the process is initiated, followed by step S11 in which it is checked whether the arrangement was operating in the live mode at the moment the process was initiated in step S10. If so, then the process is ended in S12 and the arrangement is maintained in the Live mode. In the live mode the video signal is already output at normal speed. So there is no reason to start new processes. However, if it appears in step S11 that the arrangement was not operating in the Live mode, then all trick mode processes are stopped in S13 and subsequently step S14 is executed. In Step S14 the read out speed of the time shift buffer is set at a value corresponding with the speed with which the video information is written in the time shift buffer 21. The read pointer RP maintains the value which it had at the end of the previous trick play mode. After the execution of S14 the video signal is fed to the output 27 in a time shifted manner.

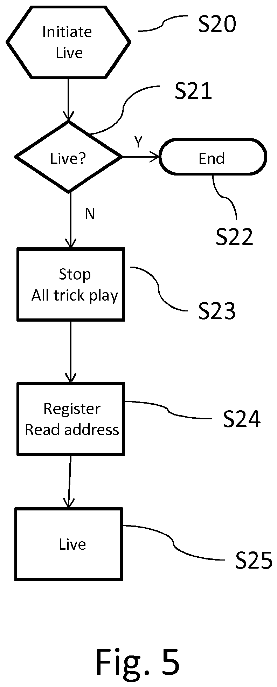

Fig. 5 shows the flow diagram of the process which is executed when a request command is received to bring the arrangement in the Live mode. In S20 the process is initiated. Subsequently in S21 it is tested whether the arrangement is already in the Live mode. If so, then in step S22 the process is stopped, else step S21 is followed by step S23. In S23 all trick play processes are stopped. After the execution of S23 the actual value of the read pointer is registered in S24 so as to mark the place in the time shift buffer were the read out in the trick mode has stopped. Then in S25 the multiplexer is set in the mode in which it feeds the video signal received on input 20 to transfer output 27, so that the live video information is now available on the transfer output 27.

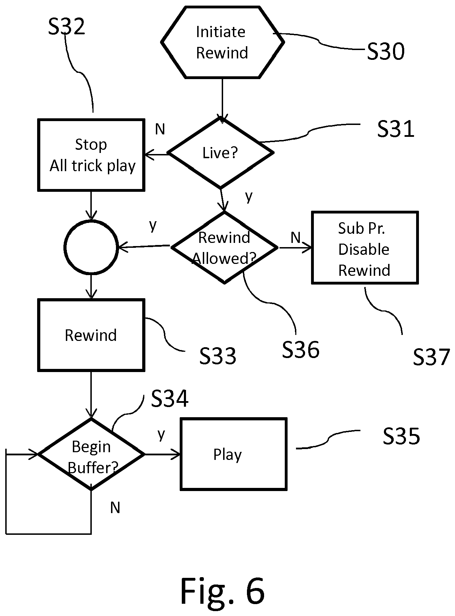

Fig. 6 shows a flow diagram of a software controlled process which is executed when the arrangement is brought in the Rewind mode. In S30 the process is initiated. Subsequently in S31 it is tested whether the arrangement was operating in the Live mode at the moment that Rewind mode was initiated. If not, then in step S32 all trick play processes are stopped and subsequently in step S33 the Rewind process is started. In S34 it is continuously checked on the basis of the control data whether the beginning of the time shift buffer has been reached. If so in step S35 the Rewind mode is stopped and the arrangement is brought in the Pause mode by starting the process described in Fig. 3.

If during the execution of step S31 it is determined that the arrangement was operating in the Live mode, then in step S36 it is determined on the basis of the control data whether the Rewind mode is allowed. The Rewind is only allowed in case the Rewind mode will not result in that the time shift buffer outputs program information which represents a program part which has not yet been made available on the output and which is following a trick play restricted part program part which has also not yet been made available on the transfer output 27. This is the case when video information representing trick play restricted parts which are not yet outputted to the transfer output 27 are present in the time shift buffer between the begin of the time shift buffer and the actual writing position. The test in step S36 is made on the basis of the address ranges included in the control data.

If in step S 36 it is determined that the rewind mode is not allowed , then in step S37 a jump to a subprogram SP for disabling the Rewind mode is made.

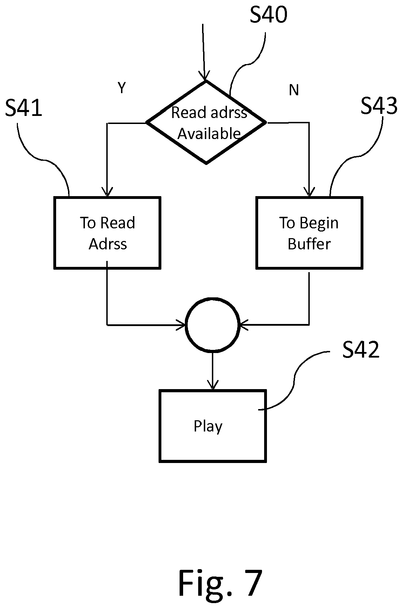

Fig. 7 shows a flow diagram of a first embodiment of the subprogram SP.

The subprogram starts with the execution of step S40. In this step it is determined whether the position in the time shift buffer, indicated by the registered reading pointer RP, is between the actual writing position and the position of the oldest program information the time shift buffer 21. If so, a jump to this position is made in step S41 and the arrangement is brought in the Play mode in step S42, resulting in the output of a still picture stored at the position indicated by RP, which is the position where the read out in the previous trick mode stopped.

If in step S40 it is determined that the pointer RP points to an address before the location with the oldest stored program information, then in step S43 a jump to the location where this oldest program information is stored is made. After the step S43 the Pause mode is entered in step S42, resulting in an output of a still picture of the oldest program part represented by the program information stored in the time shift buffer 21.

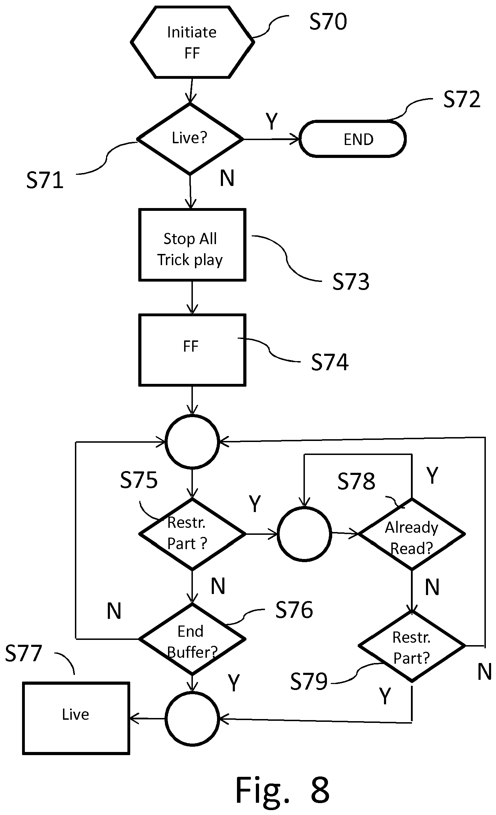

Fig. 8 shows a flow diagram of a software controlled process which is executed when the arrangement is brought in the Fast Forward mode. In S70 the process is initiated, followed by step S71 in which it is checked whether the arrangement was operating in the live mode at the moment that the Fast Forward mode was initiated. If so, then the process is ended in S72 and the arrangement is maintained in the Live mode. In the live mode Fast Forward is not possible. However if it appears in step S71 that the arrangement was not operating in the Live mode, then all trick mode processes are stopped in S73 and subsequently step S74 is executed. In Step S74 the read out process of the time shift buffer is brought in status in which a sequence of jumps is, each time skipping a part of the video information. This causes a rendering of the video information in normal order but at high speed. Step S74 is followed by a step S75 in which it is checked whether the reading has reached a video part with trick play restrictions. If not it is checked in step S76 whether the reading has reached the end of the information stored in the time shift buffer 21. If not, Step S75 is executed again. If yes, then in step S77 the Live mode is entered.

If it appeared during the execution of Step S75 that a video part with trick play restrictions has been reached, then it is checked in step S78 whether this video information has already been read from the time shift buffer to be rendered. This checking continues until video information is reached which has not yet been read. If such unread video has been reached it is checked in step S79 whether the information currently has still trick play restrictions. If so this means that a part of the information has been reached which is not yet read and rendered. Skipping this part is not allowed. The trick play is stopped and the Live mode is entered in step S77. Alternatively, the Play mode could be entered instead of the Live mode. If no trick play restrictions are detected in step S79, then the process is continued with step S75.

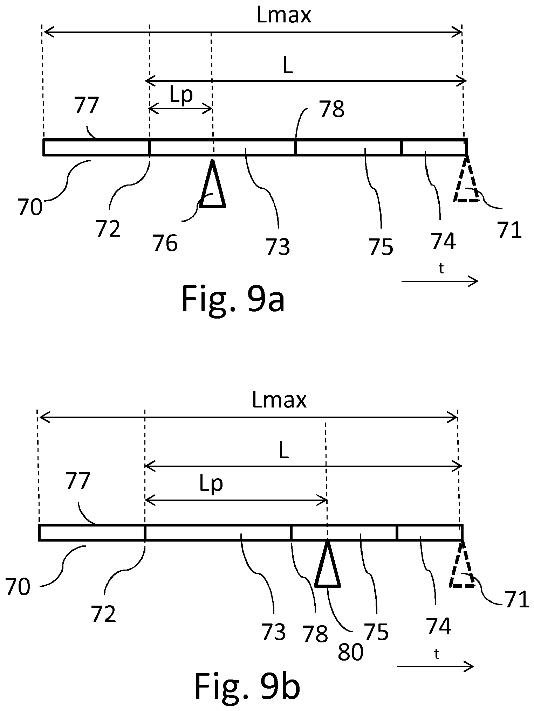

The effect on the trick play of the control processes of Fig. 3 to 8 described hereinbefore will further described with reference to Fig. 9a to Fig. 9c

Fig 9a shows a schematic overview of the contents stored in the time shift buffer 21. A bar 70 represents the maximum period Lmax of a program which can be stored in the time shift buffer 21. The live video information received at the input of the time shift buffer is continuously written into the time shift buffer 21. The position of the latest written video information, corresponding with the live video information, is indicated by reference sign 71. Interval L indicates the length of the part of the video information which has been stored. Position 72 indicates the beginning of the stored period. In other words it indicates the location of the video information representing the oldest program part in the time shift buffer 21. As soon as this maximum length has been reached the oldest information in the time shift buffer is overwritten with the latest received video information. The stored contents are divided in 3 parts. Parts indicated by reference signs 73 and 74 comprise video information having no trick play restrictions. A part 75 indicates video information with trick play restrictions.

Location 76 indicates a read position for a situation wherein the arrangement 10 is in Play mode. The part between position 72 and 76 is already read from the time shift buffer and rendered on the display 30. The length of this part is indicated by Lp.

Reference sign 77 indicates an empty part of the time shift buffer 21 in which no video information of the current program is written yet.

Starting from position 76 several trick play modes are possible. In the Rewind mode the part between the position 76 and 72 can be read out in reverse order so as to cause a rendering of the video in reversed order. The flow chart of the process controlling the Rewind mode is described hereinbefore with reference to Fig 6.

In this process in step S34 it is checked whether the begin 72 has been reached. And if, so the Play mode is entered.

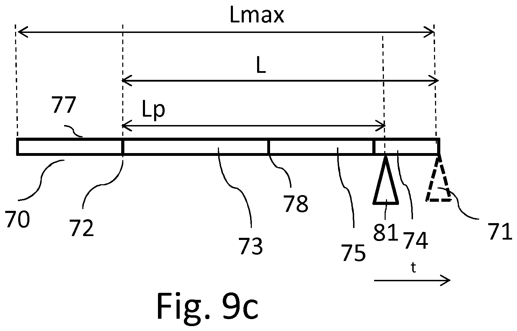

Starting from position 76 the Fast Forward mode is also possible. In case the Fast Forward mode is entered the video contents is read in forward order skipping parts of the video information so as to cause a rendering at high speed. The flow chart of the process controlling the Fast Forward mode is described hereinbefore with reference to Fig 9. The Fast Forward process continues until the beginning of part 75 with trick play restrictions has been reached as detected in the execution of steps S77. In the situation as shown in Fig 9a this part has not yet been read. So after the execution of steps S78 and S79 the Live mode is entered, resulting in that the live video information is rendered. Video part 75, after position 78, represents information with trick mode restrictions, and for that reason using a trick mode to shift the read out further is not allowed. In this way it is prevented that part 74 with no trick play restrictions can be reached by means of a trick play mode. So it is not possible to render the part 74 without rendering the part with trick mode restrictions.

After the live position has been reached the Rewind mode to move the read out position in the direction of position 78 is disabled by the execution of step S36 in the process shown in Fig.6

In this way it is prevented that a user can skip the video information part 75 by jumping to live rendering followed by a Rewind to the beginning of part 74.

If a Rewind command is given this will result in a Jump to location with was read at the moment that the arrangement was set into the Live mode, as described hereinbefore with reference to Fig. 7.

Fig 9b shows a schematic overview of the contents stored in the time shift buffer 21 with another starting position than in Fig. 9a. The arrangement operates in the Play mode with an actual reading position indicated by reference sign 80 which is located within part 75 which represents a video program part with trick play restrictions. The video information in the interval Lp is played in the Play mode.

For the interval Lp all trick modes are allowed. Although the part between location 78 and reading position 80 represents a video program part with trick play restriction trick play modes for this part is allowed because this information is already been read and the program parts represented by this information has been rendered. So these program parts are already presented to the user. However the Fast Forward mode is not allowed from reading location 80.

A Fast Forward command will result in a switch to the Live mode in step S78 and S79 as described with reference to Fig. 8 or in a switch to the Play mode.

Fig 9c shows a schematic overview of the contents stored in the time shift buffer 21 with another starting position than in Fig. 9a and 9b. The arrangement operates in the Play mode with an actual reading position indicated by reference sign 81 which is located within part 74 which represents a video program part not having trick play restrictions. The video information in the interval Lp is played in the Play mode.

Since in this situation all video information parts representing video programs with trick play restricted are already played and rendered, all trick play modes are allowed for the video information stored in the interval L.

In embodiments of the method and arrangement according to invention in which program information representing a plurality of audio and/or video programs is stored in the time shift buffer it may occur that the user wants to watch an entire program, starting from the beginning of the program. However this program may be stored in the time shift buffer after a program with one or more trick play restricted part. If so then with embodiments described hereinbefore the user is obliged to first watch the trick play limited part of the program stored before the desired program before the desired program can be watched. To prevent this annoying situation, the controller 35 can be arranged to jump over program information representing trick play limited parts to program information representing the begin of a program independent from the information which precedes the said program information in the time shift buffer.

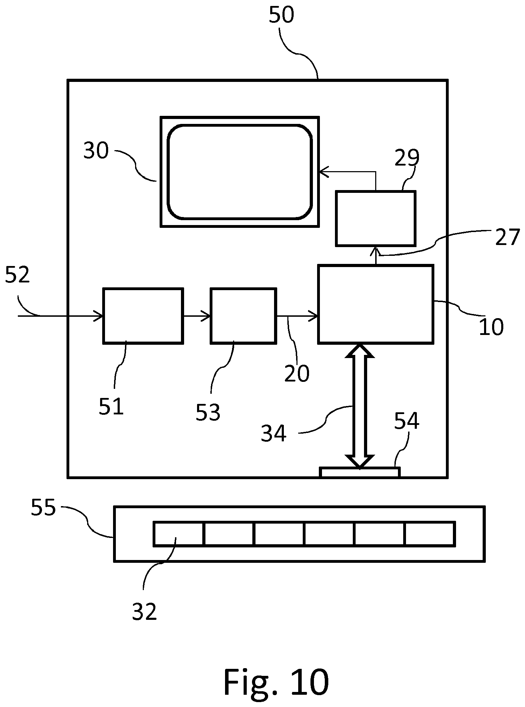

Fig. 10 shows an embodiment of a system using arrangement 10. The system shown is a TV-apparatus 50. The TV apparatus 50 comprises a tuner 51 for selecting a channel out of a plurality of TV programs available on the input 52 of the TV apparatus. The tuner 51 outputs a coded signal, for example a packetized transport stream, which comprise video information for a plurality of live TV programs. In decoder 53 the output of a selected TV program is separated from the transport stream and decoded. The decoder 53 outputs the video information to the arrangement 10. The video processor 29 and display 30 form an integral part of the TV apparatus.

The TV apparatus 50 comprises a receiver 54 for receiving user commands from a remote control device 55 which is provided with user interface 32.

By means of a remote controller 55 a user can send trick play request commands to the TV apparatus 50. A remote control signal receiver 54 is coupled to signal bus 34 for forwarding the trick play request commands to arrangement 10. In the TV apparatus described with reference to Fig. 9 the arrangement 10 is incorporated in the TV which coupled on the client side of the network.

Broadcast TV signals are often submitted by a network provider to their clients, using a network, for example a cable network or the internet. A server or head end is coupled to the network to submit a plurality of channels to the network. The clients are also coupled to the network channels to receive the channels submitted by the server or head end. Recently network providers started offering services whereby a time shifting buffer for a client is incorporated on the head end side or server side. For each client who wants to make use of such time shift service a time shift buffer is present.

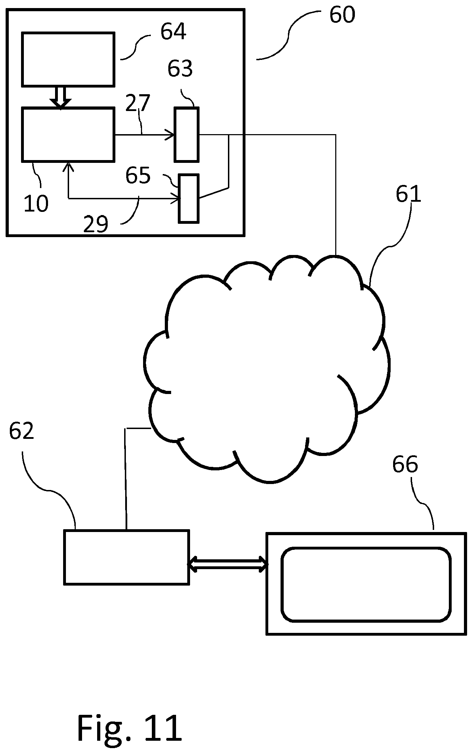

Figure 11 shows an embodiment of a networked system in which the time shift buffer is integrated at the server side. In this embodiment a server 60 is coupled to a network in the form of the internet 61.

A internet receiver unit 62 is also coupled to the internet 61.

The server comprises a content unit 64 in which video information is stored which has to be sent to the receiver unit 62. The video information is submitted via the arrangement 10 to a streaming unit 63 which creates a video stream which is sent via the internet to receiver unit 62. The video information received by the receiver unit 62 is submitted a display device 66, e.g. a monitor or TV-apparatus, for rendering the video information. The server 60 comprises a communication unit 65 coupled to the internet 61 to receive user commands from receiver unit 62 at the client side. The communication unit forwards the user commands to bus 29 of arrangement 10.

By entering the user commands on the receiver side the arrangement 10 can be brought in the Live mode in which the video information stored in content unit 64 is fed to the output 27 without a delay so that a video stream representing the live video information is streamed to the receiver unit 62.

The arrangement 10 can also be brought in the trick play modes by means of the user commands as described with reference to Figures 3 to 8. In the embodiments of the method and arrangement according to the invention described hereinbefore the Fast Forward mode is the first trick play mode that cause a decrease of the time shift. It is to be noted that the invention is not limited to embodiments in which the first trick mode is the Fast Forward mode. The invention is also applicable to all embodiments in which the decrease of the time shift is caused by other trick play modes. An example of such trick modes is the so-called Scrubbing mode. In the Scrubbing mode a small step or several consecutive small steps is/are made in either direction. After each jump the Play mode is activated/resumed in which the video is rendered in the forward direction at normal speed..

Alternatively, a pointer or indicator can be dragged (continuous press and move) over a representation of the buffer / part of the buffer, selecting another playback point, or a pointer may be placed (one time click on the new position) to another position in a representation of the buffer /part of the buffer. All these trick play modes have in common that the time shifts are decreased as a result of operating the arrangement in these trick play modes.

In the embodiments of the method and arrangement according to the invention described hereinafter the Rewind mode is the second trick play mode that cause an increase of the time shift. It is to be noted that the invention is not limited to embodiments in which the second trick mode is the Rewind mode. The invention is also applicable for all embodiments in which the increase of the time shift is caused by other trick play modes, for example the scrubbing mode or a mode wherein a pointer is dragged or placed to a new location.

Although several embodiments of the present invention have been illustrated in the accompanying drawings and described in the above detailed description, it will be understood that the invention is not limited to the embodiments disclosed, but is capable of numerous modifications without departing from the scope of the invention as set out in the following claims.

## Claims

1. A method of controlling the rendering of an audio and/or video program (1) comprising trick play limited parts (5,6) for which skipping during trick play is not desirable, whereby the audio and /or video program (1) can be rendered in a live mode or time shifted mode, whereby in the live mode program information representing the audio and or video program is directly transferred to a rendering device (11), and whereby in the time shift mode the program information is transferred to the rendering device (11) via a time shift buffer (21), the program information being stored in the time shift buffer (21) and being read as a time shifted program a time shift later than it is stored, and whereby in a first trick play mode the time shift between the program and the time shifted program is decreased, and whereby in a second trick play mode the time shift between the program and the time shifted program is increased, wherein said second trick play mode is a rewind mode or a scrubbing mode or a mode wherein a pointer is dragged or placed to a new location, and whereby in case that program information (75) representing trick play restricted parts is read from the time shift buffer (21) the first trick play mode is disabled, whereby the second trick play mode is disabled in case the reading from the time shift buffer (21) would lead to read access to program information (74) representing a program part which has not yet been rendered and which follows a trick play restricted part (75) of the program part which has not yet been rendered.

2. Method as claimed in claim 1, whereby in case the second trick play mode is disabled a backwards jump is performed to program information representing a program part preceding all trick play restricted program parts (5,6) represented by the stored program information.

3. Method according to claim 2, whereby after a trick play restricted program part has been rendered the trick play restriction is removed or ignored, so as to enable the first trick play mode when reading program information representing these parts from the time shift buffer again.

4. Method according to claim 2 or 3, whereby in case of a switch from the time shifted mode to the live mode the read out location in the time shift buffer at the moment of the switch is registered, and whereby the backwards jump is performed to the registered read out location.

5. Method as claimed in claim 4, whereby in case the time shift buffer is completely filled with the video program the oldest program parts are overwritten by newly stored program parts whereby in case the registered position is overwritten by more recent program information the backwards jump is performed to the oldest program part of the audio and/or video program still available in the time shift buffer (21).

6. Method as claimed in any preceding claim, whereby program information representing a plurality of audio and/or video programs is stored in the time shift buffer and whereby a jump over program information representing trick play limited parts to program information representing the beginning of a program is allowed.

7. A time shift arrangement (10) being a device for program information representing an audio and/or video program (1) comprising trick play limited program parts (5,6) for which skipping during trick play is not desirable, said arrangement comprises: an input (20) for receiving the program information, a transfer output (27) to be coupled to a rendering device (11) for rendering the program represented by the program information, a time shift buffer (21) for storing the program information and outputting the stored program information as a time shifted program a time shift later, and a controller (35) which is operable in a first trick play mode in which the time shift is decreased and a second trick play mode in which the time shift is increased, wherein said second trick play mode is a rewind mode or a scrubbing mode or a mode wherein a pointer is dragged or placed to a new location, whereby the arrangement (10) is operable in a live mode in which the program information received on the input is transferred without delay to the transfer output (27) and a time shifted mode in which the program information outputted by the time shift buffer (21) is transferred to the transfer output (27), and whereby the controller (35) is arranged to disable the first trick play mode in case the program information outputted from the time shift buffer (21) represents trick play restricted parts (5,6) and to disable the second trick play mode in case the reading from the time shift buffer (21) would result in that the time shift buffer (21) outputs program information which represents a program part which has not yet been made available on the output and which is following a trick play restricted part program part which has also not yet been made available on the transfer output (27) .

8. Arrangement as claimed in claim 7 arranged to perform in case of the disabling of the second trick mode play a backwards jump to program information representing a program part preceding all trick play restricted program parts represented by the stored program information.

9. An arrangement according to claim 7 arranged to remove or ignore the trick play restriction after rendering a trick play restricted so as so as to enable the first trick play mode when reading program information representing these parts from the time shift buffer (21) again.

10. An arrangement according to claim 8 or 9, arranged to register the current read out location in the time shift buffer in case of a switch from the time shifted mode to the live mode and whereby the backwards jump is a jump to the registered location.

11. Arrangement as claimed in claim 8, wherein the backwards jump is a jump to the oldest part of program information still available in the time shift buffer (21) in case the registered position is overwritten by more recent program information.

12. Arrangement as claimed in any of the claims 8 to 11, whereby program information representing a plurality of audio and/or video programs is stored in the time shift buffer and whereby the controller (35) is arranged to jump over program information representing trick play limited parts to program information representing the beginning of a program.

13. Television (50) system comprising an arrangement according to any one of the claims 7 to 12 and a display screen (30) coupled to the output of the arrangement to render the video program information represented by the audio and/or video information available on the transfer output (27).

## Patentansprüche

1. Verfahren zur Steuerung der Wiedergabe eines Audio- und/oder Videoprogramms (1) mit Trick-Play beschränkten Teilen (5, 6), für die das Überspringen während des Trick-Play nicht erwünscht ist, wobei das Audio- und/oder Videoprogramm (1) im Live-Modus oder zeitversetzten Modus wiedergegeben werden kann, wobei die Programminformationen, welche das Audio- und/oder Videoprogramm darstellen, im Live-Modus direkt an ein Wiedergabegerät (11) übertragen werden und im zeitversetzten Modus über einen Timeshift-Puffer (21) an das Wiedergabegerät (11) übertragen werden, wobei die Programminformationen in dem Timeshift-Puffer (21) gespeichert und als zeitversetztes Programm eine Timeshift später gelesen werden, als sie gespeichert worden sind, wobei die Zeitverschiebung zwischen dem Programm und dem zeitversetzten Programm in einem ersten Trick-Playmodus verkürzt wird und die Zeitverschiebung zwischen dem Programm und dem zeitversetzten Programm in einem zweiten Trick-Playmodus verlängert wird, wobei der zweite Trick-Playmodus ein Rückspulmodus, ein Scrubbing-Modus oder ein Modus ist, in dem ein Zeiger an einen neuen Ort gezogen oder bewegt wird, wobei in dem Fall, in dem aus dem Timeshift-Puffer (21) Programminformationen (75) gelesen werden, die Trick-Play beschränkte Teile darstellen, der erste Trick-Playmodus deaktiviert wird, wobei der zweite Trick-Playmodus deaktiviert wird, wenn das Auslesen des Timeshift-Puffers (21) einen Lesezugriff auf Programminformationen (74) zur Folge hätte, die einen Programmteil darstellen, der noch nicht wiedergegeben wurde und der nach einem Trick-Play beschränkten Teil (75) des Programmteils folgt, der noch nicht wiedergegeben wurde.

2. Verfahren nach Anspruch 1, wobei in dem Fall, in dem der zweite Trick-Playmodus deaktiviert ist, ein Rückwärtssprung zu Programminformationen ausgeführt wird, die einen Programmteil darstellen, der allen Trick-Play beschränkten Programmteilen (5, 6) vorausgeht, welche die gespeicherten Programminformationen darstellen.

3. Verfahren nach Anspruch 2, wobei die Trick-Play-Beschränkung nach der Wiedergabe eines Trick-Play beschränkten Programmteils entfernt oder ignoriert wird, so dass der erste Trick-Playmodus aktiviert wird, wenn aus dem Timeshift-Puffer erneut Programminformationen gelesen werden, die diese Teile darstellen.

4. Verfahren nach einem der Ansprüche 2 oder 3, wobei der Ausleseort in dem Timeshift-Puffer im Falle eines Wechsels vom zeitversetzten Modus zum Live-Modus zum Zeitpunkt des Wechsels aufgezeichnet und der Rückwärtssprung zu dem aufgezeichneten Ausleseort ausgeführt wird.

5. Verfahren nach Anspruch 4, wobei in dem Fall, in dem der Timeshift-Puffer vollständig mit dem Videoprogramm gefüllt ist, die ältesten Programmteile mit neu gespeicherten Programmteilen überschrieben werden, und wenn die aufgezeichnete Position mit aktuelleren Programminformationen überschrieben wird, wird der Rückwärtssprung zu dem ältesten Programmteil des Audio- und/oder Videoprogramms ausgeführt, der in dem Timeshift-Puffer (21) noch verfügbar ist.

6. Verfahren nach einem der vorstehenden Ansprüche, wobei in dem Timeshift-Puffer Programminformationen gespeichert werden, die eine Vielzahl von Audio- und/oder Videoprogrammen darstellen, und ein Überspringen von Programminformationen, die Trick-Play beschränkte Teile darstellen, zu Programminformationen zugelassen wird, die den Beginn eines Programms darstellen.

7. Timeshift-Anordnung (10) in Form einer Vorrichtung für Programminformationen, die ein Audio- und/oder Videoprogramm (1) darstellen, das Trick-Play beschränkte Teile (5, 6) enthält, für die das Überspringen während des Trick-Play nicht erwünscht ist, wobei die Anordnung Folgendes umfasst: eine Eingabe (20) für den Empfang der Programminformationen, eine Übertragungsausgabe (27), die zur Wiedergabe des Programms, welches die Programminformationen darstellen, mit einem Wiedergabegerät (11) verbunden wird, einen Timeshift-Puffer (21) zur Speicherung der Programminformationen und Ausgabe der gespeicherten Programminformationen als zeitversetztes Programm eine Timeshift später sowie einen Controller (35), der in einem ersten Trick-Playmodus betrieben werden kann, in dem die Zeitverschiebung verkürzt wird, und in einem zweiten Trick-Playmodus, in dem die Zeitverschiebung verlängert wird, wobei der zweite Trick-Playmodus ein Rückspulmodus, ein Scrubbing-Modus oder ein Modus ist, in dem ein Zeiger an einen neuen Ort gezogen oder bewegt wird, wobei die Anordnung (10) in einem Live-Modus betrieben werden kann, in dem die an der Eingabe empfangenen Programminformationen ohne Verzögerung an die Übertragungsausgabe (27) übertragen werden, und einem zeitversetzten Modus, in dem die von dem Timeshift-Puffer (21) ausgegebenen Programminformationen an die Übertragungsausgabe (27) übertragen werden, wobei der Controller (35) dazu dient, den ersten Trick-Playmodus zu deaktivieren, wenn die von dem Timeshift-Puffer (21) ausgegebenen Programminformationen Trick-Play beschränkte Teile (5, 6) darstellen, und den zweiten Trick-Playmodus zu deaktivieren, wenn das Auslesen des Timeshift-Puffers (21) dazu führen würde, dass der Timeshift-Puffer (21) Programminformationen ausgibt, die einen Programmteil darstellen, der an der Ausgabe noch nicht zur Verfügung gestellt worden ist und der nach einem Trick-Play beschränkten Teil des Programmteils folgt, der an der Übertragungsausgabe (27) ebenfalls noch nicht zur Verfügung gestellt worden ist.

8. Anordnung nach Anspruch 7, welche im Falle der Deaktivierung des zweiten Trick-Playmodus einen Rückwärtssprung zu Programminformationen ausführt, die einen Programmteil darstellen, der allen Trick-Play beschränkten Programmteilen vorausgeht, welche die gespeicherten Programminformationen darstellen.

9. Anordnung nach Anspruch 7, welche die Trick-Play-Beschränkung nach der Wiedergabe eines Trick-Play beschränkten Teils entfernt oder ignoriert wird, so dass der erste Trick-Playmodus aktiviert wird, wenn aus dem Timeshift-Puffer (21) erneut Programminformationen gelesen werden, die diese Teile darstellen.

10. Anordnung nach Anspruch 8 oder 9, welche den aktuellen Ausleseort in dem Timeshift-Puffer im Falle eines Wechsels vom zeitversetzten Modus zum Live-Modus aufzeichnet, wobei der Rückwärtssprung ein Sprung zu dem aufgezeichneten Ausleseort ist.

11. Anordnung nach Anspruch 8, wobei der Rückwärtssprung ein Sprung zu dem ältesten Teil der in dem Timeshift-Puffer (21) noch verfügbaren Programminformationen ist, wenn die aufgezeichnete Position mit neueren Programminformationen überschrieben wird.

12. Anordnung nach einem der Ansprüche 8 bis 11, wobei in dem Timeshift-Puffer Programminformationen gespeichert werden, die eine Vielzahl von Audio- und/oder Videoprogrammen darstellen und der Controller (35) Programminformationen überspringt, die Trick-Play beschränkte Teile darstellen, zu Programminformationen, die den Beginn eines Programms darstellen.

13. Fernsehsystem (50), umfassend eine Anordnung nach einem der Ansprüche 7 bis 12 und einen Bildschirm, der mit der Ausgabe der Anordnung verbunden ist, um die Videoprogramminformationen wiederzugeben, welche die an der Übertragungsausgabe (27) verfügbaren Audio- und/oder Videoinformationen darstellen.

## Revendications

1. Procédé de commande de la reproduction d'un programme audio et/ou vidéo (1) comprenant des parties limitées de lecture spéciale (5, 6) pour lesquelles une omission au cours de la lecture spéciale n'est pas souhaitable, le programme audio et/ou vidéo (1) pouvant être reproduit en mode live ou en mode de décalage dans le temps, en mode live l'information de programme représentant le programme audio et/ou vidéo (1) étant directement transmise à un dispositif de reproduction (11), et en mode de décalage dans le temps, l'information de programme étant transmise au dispositif de reproduction (11) par l'intermédiaire d'un tampon de programmation (21), l'information de programme étant enregistrée dans le tampon de programmation (21) et étant lue en tant que programme décalé dans le temps avec un décalage dans le temps après son enregistrement, dans un premier mode de lecture spécial, le décalage dans le temps entre le programme et le programme décalé dans le temps étant diminué, et dans un second mode de lecture spéciale, le décalage dans le temps entre le programme et le programme décalé dans le temps étant augmenté, le second mode de lecture spéciale étant un mode de retour rapide ou un mode de nettoyage ou un mode dans lequel un pointeur est glissé ou positionné sur un nouvel emplacement, et, lorsque une information de programme (75) représentant des parties restreintes de lecture spéciale est lues à partir du tampon de programmation (21) le premier mode de lecture spéciale est désactivé, le second mode de lecture spéciale étant désactivé lorsque la lecture à partir du tampon de programmation (21) conduirait à un accès de lecture à une information de programme (74) représentant une partie de programme qui n'a pas encore été reproduite et qui suit une partie restreinte de lecture spéciale (75) de la partie de programme qui n'a pas encore été reproduite.

2. Procédé conforme à la revendication 1, selon lequel lorsque le second mode de lecture spéciale est désactivé, un saut en arrière est effectué vers une information de programme représentant une partie de programme précédant toutes les parties de programme restreintes de lecture spéciale (5, 6) représentées par l'information de programme enregistrée.

3. Procédé conforme à la revendication 2, selon lequel après qu'une partie à programme restreinte de lecture spéciale ait été reproduite, la restriction de lecture spéciale est éliminée ou ignorée de façon à activer le premier mode de lecture spéciale lors de la relecture d'une l'information de programme représentant ces parties à partir du tampon de programmation.

4. Procédé conforme à la revendication 2 ou 3, selon lequel lors d'une commutation entre le mode de décalage dans le temps et le mode live, l'emplacement de lecture dans le tampon de programmation au moment où la commutation est enregistré et un saut en arrière est effectué vers l'emplacement de lecture enregistré.

5. Procédé conforme à la revendication 4, selon lequel lorsque le tampon de programmation est totalement rempli par le programme vidéo, les parties de programme les plus anciennes sont écrasées par des parties de programme nouvellement enregistrées, et, lorsque l'emplacement enregistré est écrasé par une information de programme plus récente, le saut en arrière est effectué vers la partie de programme la plus ancienne du programme audio et/ou vidéo encore disponible dans le tampon de programmation (21).

6. Procédé conforme à l'une quelconque des revendications précédentes, selon lequel une information de programme représentant un ensemble de programmes audio et/ou vidéo est enregistrée dans le tampon de programmation, et un saut sur une information de programme représentant des parties limitées de lecture spéciale vers une information de programme représentant le début d'un programme est autorisé.

7. Agencement à décalage dans le temps (10) constitué par un dispositif destiné à une information de programme représentant un programme audio et/ou vidéo (1) comprenant des parties de programme limitées de lecture spéciale (5, 6) pour lesquelles une omission au cours de la lecture spéciale n'est pas souhaitable, cet agencement comprenant une entrée (20) permettant de recevoir l'information de programme, une sortie de transmission (27) destinée être couplée à un dispositif de reproduction (11) permettant de reproduire le programme représenté par l'information de programme, un tampon de programmation (21) permettant d'enregistrer l'information de programme et de délivrer en sortie l'information de programme enregistrée en tant que programme décalé dans le temps avec un décalage dans le temps, et un régulateur (35) susceptible de fonctionner dans un premier mode de lecture spéciale dans lequel le décalage dans le temps est diminué et dans un second mode de lecture spéciale dans lequel le décalage dans le temps est augmenté, le second mode de lecture spécial étant un mode de lecture rapide ou un mode de nettoyage ou un mode dans lequel un pointeur est glissé ou positionné sur un nouvel emplacement, l'agencement (10) pouvant fonctionner dans un mode live dans lequel l'information de programme reçue à l'entrée est transmise sans délai vers la sortie de transmission (27) et un mode de décalage dans le temps dans lequel l'information de programme délivrée en sortie par le tampon de programmation (21) est transférée vers la sortie de transmission (27), et le régulateur (35) est susceptible de désactiver le premier mode de lecture spéciale lorsque l'information de programme délivrée en sortie par le tampon de programmation (21) représente des parties restreintes de lecture spéciale (5, 6) et de désactiver le second mode de lecture spéciale lorsque la lecture à partir du tampon de programmation (21) aurait pour conséquence que le tampon de programmation (21) délivre en sortie une information de programme représentant une partie de programme qui n'a pas encore été rendue disponible sur la sortie et qui suit une partie de programme restreinte de lecture spéciale qui n'a également pas encore été rendue disponible sur la sortie de transfert (27).

8. Agencement conforme à la revendication 7, susceptible d'effectuer, en cas de désactivation du second mode de lecture spéciale un saut en arrière vers une information de programme représentant une partie du programme précédant toutes les parties de programme restreintes de lecture spéciale représentées par l'information de programme enregistrée.

9. Agencement conforme à la revendication 7, susceptible d'éliminer ou d'ignorer la restriction de lecture spéciale après la reproduction d'une partie restreinte de lecture spéciale de façon à activer le premier mode de lecture spéciale lors de la relecture de l'information de programme représentant ces parties à partir du tampon de programmation (21).

10. Agencement conforme à la revendication 8 ou 9, susceptible d'enregistrer l'emplacement de lecture actuel dans le tampon de programmation en cas de commutation du mode de décalage dans le temps dans le mode live, le saut en arrière étant un saut vers l'emplacement enregistré.

11. Agencement conforme à la revendication 8, dans lequel le saut en arrière est un saut vers la partie la plus ancienne de l'information de programme encore disponible dans le tampon de programmation (21) lorsque la position enregistrée est écrasée par une information de programme plus récente.

12. Agencement conforme à l'une quelconque des revendications 8 à 11, dans lequel une information de programme représentant un ensemble de programmes audio et/ou vidéo est enregistrée dans le tampon de programmation et le régulateur (35) est susceptible d'effectuer un saut sur une informations de programme représentant des parties limitées de lecture spéciale vers une information de programmation représentant le début d'un programme.

13. Système de télévision (50) comprenant un agencement conforme à l'une quelconque des revendications 7 à 12, et un écran d'affichage (30) couplé à la sortie de l'agencement pour reproduire l'information de programme vidéo représentée par l'information audio et/ou vidéo disponible sur la sortie de transfert (27).
